# EUROPEAN PATENT SPECIFICATION

(11) **EP 4 372 500 B1**
(45) Date of publication and mention of the grant of the patent: **22.04.2026**
(21) Application number: 23156904.7
(22) Date of filing: 15.02.2023
(51) Int. Cl.: G05B 19/4093, B23Q 3/155

(54) **CUTTING TOOL CHANGE METHOD FOR INTELLIGENT TOOL CART AND INTELLIGENT TOOL CART THEREOF**
SCHNEIDWERKZEUGWECHSELVERFAHREN FÜR INTELLIGENTEN WERKZEUGWAGEN UND INTELLIGENTER WERKZEUGWAGEN DAFÜR
PROCÉDÉ DE CHANGEMENT D'OUTIL DE COUPE POUR CHARIOT D'OUTIL INTELLIGENT ET CHARIOT D'OUTIL INTELLIGENT ASSOCIÉ

(30) Priority: 16.11.2022 TW 111143798
(43) Date of publication of application: 22.05.2024
(73) Proprietor: Da Shiang Automation Industrial Co., Ltd., Taoyuan City (TW)
(72) Inventor: Huang, Hao-Lun, Taoyuan City (TW); Yang, Yi-Zhe, Taoyuan City (TW)
(74) Representative: Casalonga

(56) References cited:
- EP-A1- 3 895 849
- CN-A- 113 523 867
- CN-A- 114 714 124
- US-A1- 2021 240 162

## Description

The present invention relates to a tool cart, especially a cutting tool change method for an intelligent tool cart and the intelligent tool cart thereof.

Cutting tools are indispensable for CNC machine tools. For different machining methods, workpieces, and CNC machine tools, the required cutting tools are different. A general machining factory usually has multiple CNC machine tools to process various workpieces; in addition, the cutting tools' life spans also need to be considered. As there are many types of cutting tools used in a general machining factory, management of which often takes a lot of manpower and time to control the timing and timeliness of cutting tool changes, to essentially avoid using wrong cutting tools, and to take the cutting tools' life spans into account.

There are cutting tool carts, cutting tool management systems, and cutting tool magazine management systems available on current markets. Among them, cutting tools checked out from cutting tool magazines and cutting tools returned to the cutting tool magazines all rely on the tool cart to do the intermediate transportation. The cutting tools checked out from the cutting tool magazines are sent to on-site machine tools by the tool cart, and then the cutting tools are mounted to the machine tools manually and/or by equipment. The cutting tools dismounted from the machine tools and loaded to the tool cart are returned to the cutting tool magazines manually and/or by equipment. Apparently, the cutting tools on the tool cart need to be managed, recorded and checked to avoid taking wrong cutting tools. However, the existing tool carts on current markets do not have proper functionalities of checking the cutting tools, so that when the tool cart loads and unloads the cutting tools, manpower is often required to record and check the dismounted/to-be-mounted cutting tools to affirm their correctness. As the above-mentioned cutting tool change processes and tool management are both time-consuming and error-prone, there is an urgent need for solving the above-mentioned problems of cutting tool change processes and tool management.

EP published application EP3895849A1 discloses a smart cutting tool cart has at least one drawer to accommodate multiple cutting tools and multiple cutting tool bases, a controller electrically connected to a cutting tool data reading base and capable of reading in a cutting tool's identification data including a product name, a part number or a product provenance. The controller can confirm the correctness of a cutting tool to be mounted on or dismounted from a machine tool according to the received information of the machine tool, a work order information, and the identification data of the cutting tool. In addition, a cutting tool changing method for a smart cutting tool cart is also disclosed.

CN published application CN114714124A discloses an intelligent tool changing system comprises an intelligent tool lathe and an intelligent tool rest device. The intelligent tool rest device is arranged beside a machine tool, and the intelligent tool car can move in a machining plant and move to the side of each machine tool, so that a tool holder to be mounted on the intelligent tool car is mounted on the intelligent tool rest device beside each machine tool, and a tool holder discharged from the intelligent tool rest device is mounted on the intelligent tool car.

CN published application CN113523867A discloses an intelligent tool car and a tool changing method thereof. The intelligent tool car comprises at least one drawer and a control unit, wherein the at least one drawer can accommodate a plurality of tool holders and a plurality of tool holder bases; the control unit is electrically connected to a tool holder data reading base and can read identification data of a tool holder; the identification data comprises a product name, a material number or a resume; and the control unit can confirm whether a tool holder to be installed on a machine tool or a tool holder detached from the machine tool is correct or not according to received machine tool information, work order information and the identification data of the tool holder.

US published application US2021240162A1 discloses a method for transmitting at least one tool presetting data set of a machining tool that is stored on an electronic storage medium, at least one tool measuring data set of the machining tool that is stored on an electronic storage medium and/or at least one tool processing data set of the machining tool that is stored on an electronic storage medium to a machine tool that is controlled via Computerized Numerical Control, with a data communication unit, wherein in a tool delivery step at least the machining tool is delivered to the CNC machine tool and wherein in a tool identification step the delivered machining tool is identified via a tool identification unit, which is in particular allocated to the CNC machine tool.

In order to resolve the above-mentioned problems, the present invention discloses a cutting tool change method for an intelligent tool cart and the intelligent tool cart thereof. And the invention is set out in the appended set of claims.

According to the above-mentioned intelligent tool cart, and cutting tool change method for the intelligent tool cart of the present invention, the present invention is able to solve the above-mentioned problems of cutting tool change processes and tool management to fulfill the purposes of the present invention.

### In The Drawings:

Figure 1 is a schematic view of an intelligent tool cart of the present invention;
Figure 2A is a flow chart of the process flow of the present invention regarding selecting and loading cutting tools to the intelligent tool cart;
Figures 3A-3B are flow charts of the present invention regarding the process flow of mounting cutting tools on a machine tool.

In the following, the technical solutions in the embodiments of the present invention will be clearly and fully described with reference to the drawings in the embodiments of the present invention. Obviously, the described embodiments are only a part of the embodiments of the present invention, but not all the embodiments. Based on the embodiments of the present invention, all other embodiments obtained by a person of ordinary skill in the art without creative efforts shall fall within the protection scope of the present invention.

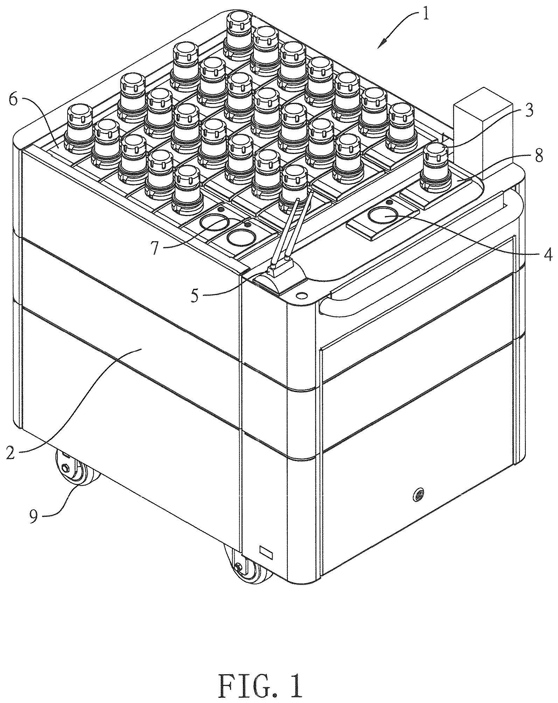

Please refer to Fig. 1, which shows a schematic view of an intelligent tool cart of the present invention. In Fig. 1, an intelligent tool cart 1 of the present invention has a body 2, a bottom of the body 2 is disposed with a plurality of wheels 9, and a top of the body 2 is disposed with a plurality of tool holders 6, a temporary tool holder 8, a tool reading holder 4 and a wireless communication device 5. Each of the plurality of tool holders 6, the temporary tool holder 8 and the tool reading holder 4 has an accommodating space (not shown) and an indicator light 7. The indicator light 7 is, for example, a light-emitting lamp which includes a light-emitting diode (LED), an organic light-emitting diode (OLED) or a quantum dot (QD). Each of the plurality of tool holders 6 and the temporary tool holder 8 is disposed with a sensor (not shown), and the tool reading holder 4 is disposed with an identity sensor (not shown). Wherein said accommodating space is mainly used for accommodating a blade of a cutting tool 3; a handle of the cutting tool 3 is exposed to the outside to facilitate actions regarding loading the cutting tool 3 into the accommodating space or taking the cutting tool 3 out of the accommodating space. As shown in Fig. 1, each of the plurality of tool holders 6, the temporary tool holder 8 and the tool reading holder 4 can hold a cutting tool 3 therein.

Continuing from the above, when an individual indicator light 7 of the tool holder 6, the temporary tool holder 8, or the tool reading holder 4 flashes, it indicates that each of the tool holder 6, the temporary tool holder 8, or the tool reading holder 4 is correspondingly designated to either receive and hold a cutting tool 3 or a cutting tool 3 is to be taken out therefrom. The sensors respectively disposed on the tool holder 6 or the temporary tool holder 8 are used to respectively sense whether there is any cutting tool 3 held in the tool holder 6 or the temporary tool holder 8, and the identity sensor disposed on the tool reading holder 4 can sense a tag, such as a radio frequency identification (RFID) tag or a barcode tag (QR code/barcode), disposed on the handle of the cutting tool 3, to obtain a cutting tool identification data of the cutting tool 3, but the present invention is not limited to this.

The intelligent tool cart 1 of the present invention also has a control module (not shown), and the control module can be a computer system with microcontrollers or microprocessors. The control module is electrically connected with all indicator lights 7, sensors, the identity sensor disposed on the tool holders 6, the temporary tool holder 8, and the tool reading holder 4. At the same time, the control module is also electrically connected with the wireless communication device 5. The wireless communication device 5 supports functions such as wireless networking like Wi-Fi, but the present invention is not limited to this. The control module can communicate with a local area network (Local Area Network) through the wireless communication device 5, but the present invention is not limited to this. A system application program (hereinafter referred to as the system APP) can be performed by the control module or by an external server/cloud to guide the process flow of cutting tool change for a designated machine tool by means of instruction and control. The designated machine tool can also communicate with the system APP by means of the wireless communication.

The cutting tool identification data of a cutting tool 3 includes a blade identification code and a cutting tool name, and the cutting tool 3 also has a cutting tool basic information including, for example, a blade type number, a tag type (such as RFID), a cutting tool type (such as Φ 6.0 SD spot drill), a cutting tool source (such as a new cutting tool), a measured tool length (such as 128.88 mm) and a measured tool diameter (such as 6.072 mm). The cutting tool identification data and the cutting tool basic information of the cutting tool 3 are stored in a system database.

The tool change method of the intelligent tool cart of the present invention is mainly about the system APP guiding a process flow of cutting tool change to change at least one cutting tool for a designated machine tool according to a cutting tool deployment information specifically for the designated machine tool. The cutting tool deployment information includes a designated machine tool information and a cutting tool demand information, wherein specific content of the designated machine tool information is an identification information of the designated machine tool, such as a machine tool number; and specific content of the cutting tool demand information is a list, which has multiple entries of required cutting tool data, or just one entry of required cutting tool data, said entry of required cutting tool data has a cutting tool identification data and a machine tool's cutting tool position, where said cutting tool identification data refers to the cutting tool identification data of a cutting tool required by the designated machine tool, and the machine tool's cutting tool position is designated with a serial number of a cutting tool position of the designated machine tool, wherein the cutting tools required by the designated machine tool should be mounted to the cutting tool positions in the designated machine tool.

The tool change method of an intelligent tool cart of the present invention mainly includes four parts: adding a cutting tool, editing cutting tool deployment information, selecting and loading cutting tools to the intelligent tool cart, and selecting and mounting cutting tools to a machine tool.

Regarding the part of adding a cutting tool, in the present invention, to add a cutting tool to the system database only requires registering cutting tool identification data and cutting tool basic data of the to-be-added cutting tool to the system database. The system database also has relevant machine tools' identification information and basic information.

Regarding editing cutting tool deployment information, in the present invention, a production management system based on the system database and according to the requirements of a machining process, edits a cutting tool deployment information specifically for a designated machine tool. For example, when drilling process B for workpiece A demands a cutting tool EX be mounted to a cutting tool position DX of a designated machine tool C to drill a hole X on the workpiece A, a corresponding cutting tool deployment information can be edited to include designated machine tool information and cutting tool demand information, wherein the specific content of the designated machine tool information is machine tool identification information of the designated machine tool C, and the specific content of the cutting tool demand information is a list. At this moment, the list has only one entry of required cutting tool data, and said one entry of required cutting tool data includes cutting tool identification data of the cutting tool EX and cutting tool position DX of the machine tool C; when the drilling process B of workpiece A further demands a cutting tool EY be mounted to a cutting tool position DY of the designated machine tool C to drill a hole Y on workpiece A, a corresponding entry of required cutting tool data should be added to the list, which includes cutting tool identification data of the cutting tool EY and cutting tool position DY of the machine tool C. At this moment, the list has two entries of required cutting tool data. When a milling process B1 of workpiece Al also demands a cutting tool EY1 be mounted to a cutting tool position DY1 of the designated machine tool C to drill a hole Y1 on workpiece A1, a corresponding entry of required cutting tool data should be added to the list, which includes cutting tool identification data of the cutting tool EY1 and cutting tool position DY1 of the designated machine tool C. At this moment, the list has three entries of required cutting tool data. Hence the list can have one or more entries of required cutting tool data, and the list can include multiple entries of required cutting tool data for various workpieces and various machining processes.

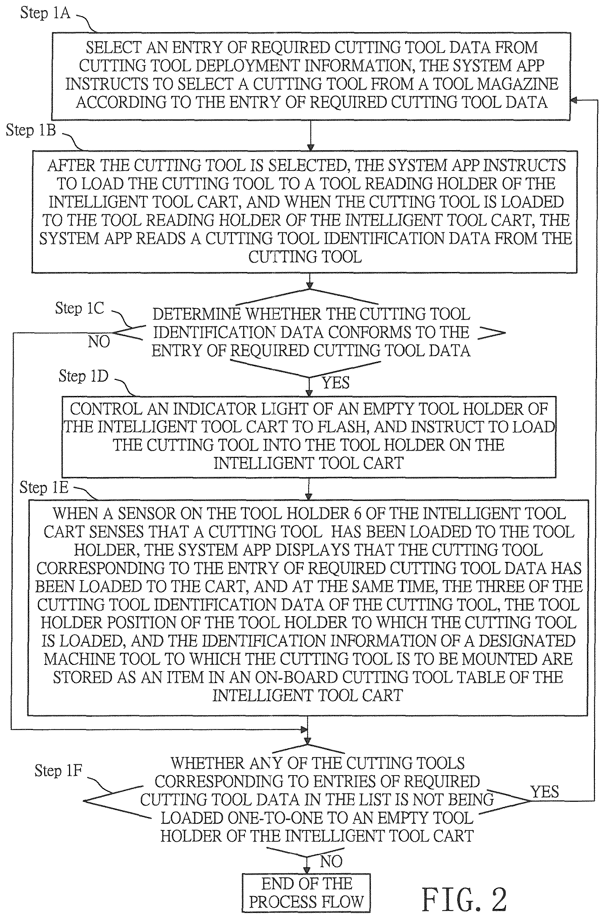

Continuing from the above, regarding the part of selecting and loading cutting tools to the intelligent tool cart, please refer to the process flow shown in Fig. 2. In one embodiment, the system APP instructs and guides a process flow of selecting and loading cutting tools to the intelligent tool cart according to the list, and cutting tools 3 corresponding to entries of required cutting tool data in the list are one after another being taken from tool magazines and loaded to the intelligent tool cart 1. A detailed process flow is as follows:
Step 1A: Select an entry of required cutting tool data from cutting tool deployment information, the system APP instructs to select a cutting tool 3 from a tool magazine according to the entry of required cutting tool data;
Step 1B: After the cutting tool 3 is selected, the system APP instructs to load the cutting tool 3 to a tool reading holder 4 of the intelligent tool cart 1, and when the cutting tool 3 is loaded to the tool reading holder 4 of the intelligent tool cart 1, the system APP reads a cutting tool identification data from the cutting tool 3;
Step 1C: Determine whether the cutting tool identification data conforms to the entry of required cutting tool data, when the cutting tool identification data does not conform to the entry of required cutting tool data, skip to step 1F;
Step 1D: Control an indicator light 7 of an empty tool holder 6 of the intelligent tool cart 1 to flash, and instruct to load the cutting tool 3 into the tool holder 6 on the intelligent tool cart 1;
Step 1E: When a sensor on the tool holder 6 of the intelligent tool cart 1 senses that a cutting tool 3 has been loaded to the tool holder 6, the system APP displays that the cutting tool 3 corresponding to the entry of required cutting tool data has been loaded to the cart, and at the same time, the three of the cutting tool identification data of the cutting tool 3, the tool holder position of the tool holder 6 to which the cutting tool 3 is loaded, and the identification information of a designated machine tool to which the cutting tool 3 is to be mounted are stored as an item in an on-board cutting tool table of the intelligent tool cart 1;
Step 1F: When any of the cutting tools 3 corresponding to entries of required cutting tool data in the list is not being loaded one-to-one to an empty tool holder 6 of the intelligent tool cart 1, go back to the step 1A.
Step 1G: End of process flow.

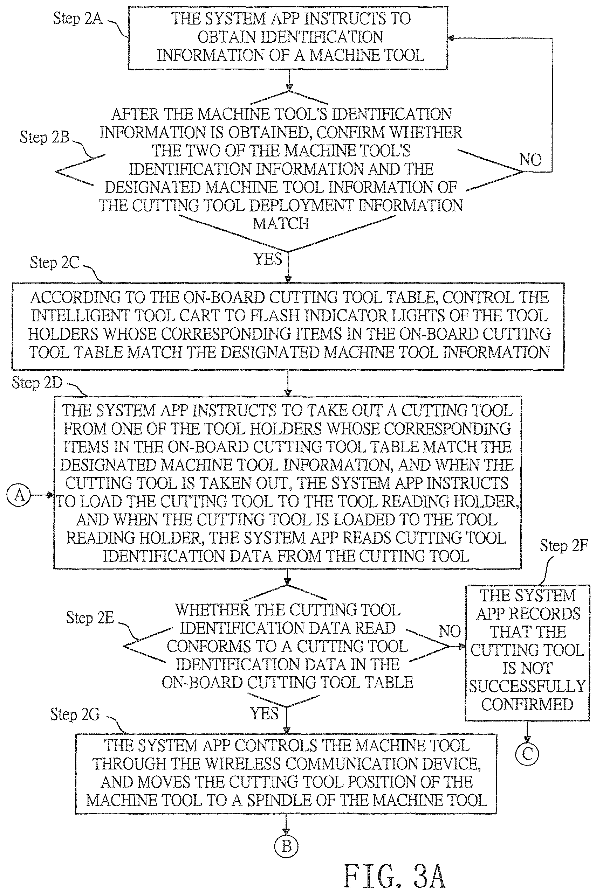

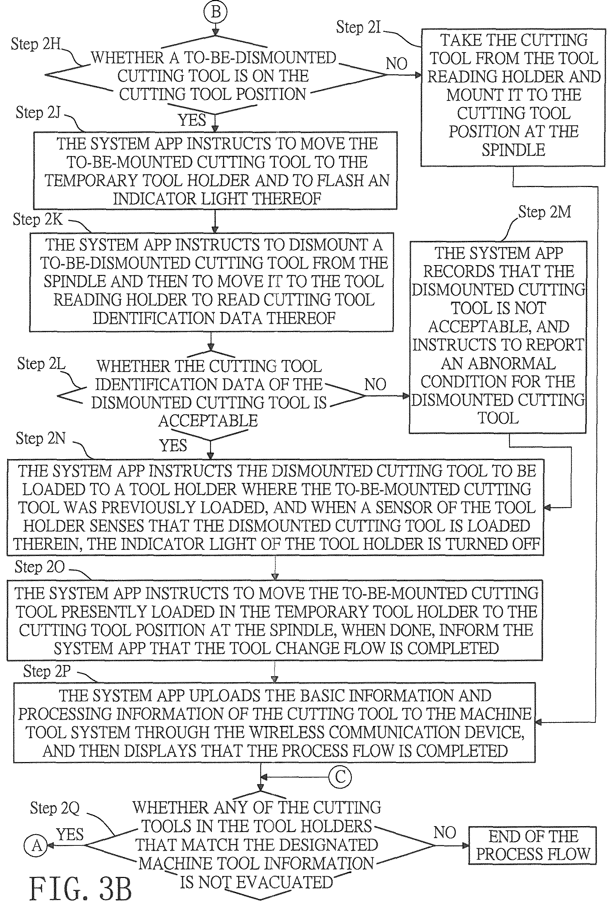

Regarding the part of selecting and mounting cutting tools to the machine tool, please refer to the process of Fig. 3. In one embodiment, the system APP instructs and guides a process flow of selecting and mounting cutting tools to the machine tool according to the cutting tool deployment information. The cutting tools 3 are one by one taken out and mounted to correct tool holder positions of the machine tool, and at the same time, cutting tool basic information corresponding to the cutting tool 3 and machining information of the designated machine tool are transmitted, via the wireless communication device 5, to a machine tool system that controls the designated machine tool. The detailed process flow is as follows:
First, the system APP instructs to confirm that a machine tool is the designated machine tool in the cutting tool deployment information, which includes the following details:
Step 2A: The system APP instructs to obtain identification information of a machine tool. For example, the identification information is stored in a barcode (i.e. QR code/barcode) on the surface of the machine tool, and the barcode can be scanned by a barcode reader to obtain the machine tool's identification information;
Step 2B: After the machine tool's identification information is obtained, confirm whether the two of the machine tool's identification information and the designated machine tool information of the cutting tool deployment information match. If the two do not match, go back to step 2A;
Step 2C: According to the on-board cutting tool table, control the intelligent tool cart 1 to flash indicator lights 7 of the tool holders 6 whose corresponding items in the on-board cutting tool table match the designated machine tool information.

Next, taking out a cutting tool 3 from a tool holder whose indicator light 7 flashes (i.e. an arbitrary matched cutting tool 3 is taken out among tool holders that flashes), and confirming that the cutting tool 3 is correct, which includes the following details:
Step 2D: The system APP instructs to take out a cutting tool 3 from one of the tool holders 6 whose corresponding items in the on-board cutting tool table match the designated machine tool information, and when the cutting tool 3 is taken out (i.e. an arbitrary matched cutting tool 3 is taken out among tool holders that flashes), the system APP instructs to load the cutting tool 3 to the tool reading holder 4, and when the cutting tool 3 is loaded to the tool reading holder 4, the system APP reads cutting tool identification data from the cutting tool 3.

At this moment, if the cutting tool identification data read conforms to a cutting tool identification data in the on-board cutting tool table, the system APP instructs to take out the cutting tool 3 from the tool reading holder 4 and to mount the cutting tool 3 to a corresponding cutting tool position of the designated machine tool which includes the following details:
Step 2E: when the cutting tool identification data read conforms to a cutting tool identification data in the on-board cutting tool table, skip to step 2G;
Step 2F: the system APP records that the cutting tool 3 is not successfully confirmed, skip to step 2Q;
Step 2G: The system APP controls the machine tool through the wireless communication device 5, and moves the cutting tool position of the machine tool to a spindle position of the machine tool;
Step 2H: When a to-be-dismounted cutting tool 3 is on the cutting tool position, skip to Step 2J;
Step 2I: Directly take the tool 3 from the tool reading holder 4 and mount the tool 3 to the cutting tool position at the spindle position, and inform the system APP that the tool change process flow is completed; skip to step 2P;
Step 2J: The system APP instructs to move the to-be-mounted cutting tool 3 to the temporary tool holder 8, and controls an indicator light 7 of the temporary tool holder 8 of the intelligent tool cart 1 to flash;
Step 2K: The system APP instructs to dismount a to-be-dismounted cutting tool on the cutting tool position at the spindle position and then to move the dismounted cutting tool to the tool reading holder 4 on the intelligent tool cart 1 to read cutting tool identification data of the dismounted cutting tool;
Step 2L: If the cutting tool identification data of the dismounted cutting tool is confirmed to be acceptable, skip to Step 2N;
Step 2M: The system APP records that the dismounted cutting tool has not been confirmed to be acceptable, and instructs to perform an abnormal report for the dismounted cutting tool;
Step 2N: The system APP instructs the dismounted cutting tool to be loaded to a tool holder 6 of the intelligent tool cart 1 where the to-be-mounted cutting tool 3 was previously loaded (i.e., the cutting tool to-be-mounted was taken out from the tool holder 6, and the tool holder 6 is vacated), and when a sensor of the tool holder 6 senses that the dismounted cutting tool is loaded therein, the indicator light 7 of the tool holder 6 is turned off;
Step 2O: The system APP instructs to move the to-be-mounted cutting tool 6 presently loaded in the temporary tool holder 8 to the cutting tool position at the spindle position, when the cutting tool loaded in the temporary tool holder 8 is mounted on the spindle position (i.e. main shaft), inform the system APP that the tool change flow is completed;
Step 2P: The system APP uploads the basic information and processing information of the cutting tool to the machine tool system through the wireless communication device 5, and after completion, the system APP will display that the process flow of selecting and loading cutting tools to the intelligent tool cart is completed;
Step 2Q: According to the on-board cutting tool table, when any of the cutting tools in the tool holders 6 whose corresponding items in the on-board cutting tool table match the designated machine tool information is not evacuated and mounted on the spindle position, return to Step 2D above.
Step 2R: End of the process flow.

In sum, the intelligent tool cart of the present invention has a plurality of tool holders with their sensors and indicator lights, a control module, a tool reading holder and its identity sensor, and a wireless communication device. The intelligent tool cart of the present invention and the system APP collaborate to control the entire processes of loading and mounting the cutting tools. At the same time, the intelligent tool cart of the present invention also communicates with machine tools, network servers and the cloud through the wireless communication device, accordingly, loading or mounting wrong cutting tools can be avoided, and confirmation of the cutting tools dismounted from the machine tool is also performed, and all the cutting tools in the intelligent tool cart are fully grasped, hence the intelligent tool cart of the present invention can achieve the purpose of the present invention.

## Claims

1. A cutting tool change method for an intelligent tool cart, providing an intelligent tool cart (1), a system application program and a cutting tool deployment information that includes a designated machine tool information to designate a machine tool, and a list of cutting tool demand information that includes each entry of required cutting tool data in cutting tool demands of the designated machine tool, each entry of required cutting tool data includes cutting tool identification data and a cutting tool position of the machine tool, the system application program performs the following steps:
instructing to load a cutting tool corresponding to each entry of required cutting tool data to the intelligent tool cart (1) according to the list which is **characterized by** including the following steps:
Step 1: selecting one entry of required cutting tool data from the list, and instructing to take a cutting tool (3) from a tool magazine according to the entry of required cutting tool data that is selected;
Step 2: when the cutting tool (3) is selected, instructing to load the cutting tool (3) to a tool reading holder (4) of the intelligent tool cart (1);
Step 3: when the cutting tool (3) is loaded to the tool reading holder (4) of the intelligent tool cart (1), reading the cutting tool identification data of the cutting tool (3), and determining whether the cutting tool identification data is correct;
Step 4: when the cutting tool identification data is correct, controlling an indicator light (7) of an empty tool holder (6) of the intelligent tool cart (1) to flash, and instructing to load the cutting tool (3) to the empty tool holder (6) of the intelligent tool cart (1);
Step 5: when the cutting tool is loaded to the empty tool holder (6) of the intelligent tool cart (1), the three of the cutting tool identification data of the cutting tool (3), the tool holder position of the tool holder (6) to which the cutting tool (3) is loaded, and the identification information of a designated machine tool to which the cutting tool (3) is to be mounted are stored as an item in an on-board cutting tool table of the intelligent tool cart (1), and when there exists a cutting tool corresponding to any entry of required cutting tool data in the list that has not been loaded to an empty tool holder (6) of the intelligent tool cart (1), going back to step 1;
after the cutting tool corresponding to each entry of required cutting tool data is loaded to the intelligent tool cart (1), instructing to confirm that a machine tool is the designated machine tool specified in the cutting tool deployment information which includes the following steps:
Step 6: instructing to obtain an identification information of a machine tool, and when the identification information of the machine tool is obtained, confirming whether the two of the identification information of the machine tool and the designated machine tool information in the cutting tool deployment information match, and when the two match, then according to the list, controlling the intelligent tool cart (1) to flash the indicator lights (7) of the tool holders (6) whose corresponding items in an on-board cutting tool table match the designated machine tool information;
when the machine tool is confirmed to be the designated machine tool specified in the cutting tool deployment information, instructing to take a cutting tool corresponding to one entry of required cutting tool data in the list from a tool holder (6) of the intelligent tool cart (1) and loading the cutting tool to a tool reading holder (4) of the intelligent tool cart;
when the cutting tool is loaded to the tool reading holder (4), reading the cutting tool identification data of the cutting tool, and determining whether the cutting tool identification data is correct;
when the cutting tool identification data is correct, instructing to take the cutting tool from the tool reading holder (4) to a cutting tool position of the machine tool corresponding to the entry of required cutting tool data.

2. The cutting tool change method for an intelligent tool cart as claimed in claim 1, wherein the step of instructing to take the cutting tool (3) from a tool reading holder (4) to a cutting tool position of the machine tool corresponding to the entry of required cutting tool data, includes the following steps:
Step 7: controlling the machine tool, and moving a cutting tool position of the machine tool corresponding to a cutting tool (3), to a spindle position of the machine tool;
Step 8: instructing to confirm whether there is a to-be-dismounted cutting tool on the cutting tool position at the spindle position; if there is no cutting tool on the cutting tool position at the spindle position, instructing to take the cutting tool (3) from the tool reading holder (4) and to mount the cutting tool (3) to the cutting tool position at the spindle position.

3. The cutting tool change method for an intelligent tool cart as claimed in claim 2, further including:
Step 9: after the cutting tool (3) is taken from the tool reading holder (4) and mounted to the cutting tool position at the spindle position, when there is any required cutting tool in the list not taken from the tool reading holder (4) and loaded to the cutting tool position, going back to step 7.

4. The cutting tool change method for an intelligent tool cart as claimed in claim 2, further including:
Step 10: when there is a to-be-dismounted cutting tool on the cutting tool position at the spindle position, controlling an indicator light (7) of a temporary tool holder (8) of the intelligent tool cart (1) to flash, and instructing to move the to-be-mounted cutting tool (3) from the tool reading holder (4) to the temporary tool holder (8) first;
Step 11: instructing to dismount a to-be-dismounted cutting tool on the cutting tool position at the spindle position and to move the to-be-dismounted cutting tool to the tool reading holder (4) of the intelligent tool cart (1);
Step 12: when the cutting tool identification data of the dismounted cutting tool is successfully confirmed, instructing to move the dismounted cutting tool to a tool holder (6) of the intelligent tool cart (1) where the to-be-mounted cutting tool (3) was originally loaded;
Step 13: when a sensor of the tool holder (6) where the to-be-mounted cutting tool (3) was originally loaded, senses that the dismounted cutting tool is loaded therein, the indicator light (7) of said tool holder (6) is turned off;
Step 14: instructing to take the to-be-mounted cutting tool (3) from the temporary tool holder (8) and to mount on the cutting tool holder currently at the spindle position.

5. The cutting tool change method for an intelligent tool cart as claimed in claim 1, wherein the cutting tool identification data includes a blade identification code and a cutting tool name;
when the cutting tool identification data of the cutting tool matches the cutting tool identification data of the entry of required cutting tool data of the list, the cutting tool identification data is determined to be correct.

6. The cutting tool change method for an intelligent tool cart as claimed in any one of claims 1-5, wherein the system application program communicates with the machine tool through wireless communication.

7. An intelligent tool cart, **characterized by** that the intelligent tool cart (1) is used to perform the tool change method of an intelligent tool cart in any one of claims 1-4, wherein the intelligent tool cart (1) includes a body (2), a wireless communication device (5), a plurality of tool holders (6), a temporary tool holder (8), and a tool reading holder (4); wherein each tool holder (6) in the plurality of tool holders (6) has an indicator light (7) and a sensor to sense whether a cutting tool (3) is loaded to the tool holder (6), the tool reading holder (4) is used for accommodating and reading cutting tool identification data of a cutting tool to-be-mounted to or to-be-dismounted from the machine tool.

## Patentansprüche

1. Schneidwerkzeugwechselverfahren für einen intelligenten Werkzeugwagen, das einen intelligenten Werkzeugwagen (1), ein Systemanwendungsprogramm und Schneidwerkzeugbereitstellungsinformationen bereitstellt, die Informationen über eine designierte Werkzeugmaschine zum Designieren einer Werkzeugmaschine und eine Liste von Schneidwerkzeuganforderungsinformationen enthalten, die jeden Eintrag von erforderlichen Schneidwerkzeugdaten in Schneidwerkzeuganforderungen der designierten Werkzeugmaschine enthalten, wobei jeder Eintrag von erforderlichen Schneidwerkzeugdaten Schneidwerkzeugidentifikationsdaten und eine Schneidwerkzeugposition der Werkzeugmaschine enthält, wobei das Systemanwendungsprogramm die folgenden Schritte ausführt:
Anweisen, ein Schneidwerkzeug, das jedem Eintrag von erforderlichen Schneidwerkzeugdaten entspricht, in den intelligenten Werkzeugwagen (1) gemäß der Liste zu laden, die **dadurch gekennzeichnet ist, dass** sie die folgenden Schritte umfasst:
Schritt 1: Auswählen eines Eintrags von erforderlichen Schneidwerkzeugdaten aus der Liste und Anweisen, ein Schneidwerkzeug (3) gemäß dem Eintrag von erforderlichen Schneidwerkzeugdaten, der ausgewählt ist, aus einem Werkzeugmagazin zu nehmen;
Schritt 2: wenn das Schneidwerkzeug (3) ausgewählt ist, Anweisen, das Schneidwerkzeug (3) in einen Werkzeuglesehalter (4) des intelligenten Werkzeugwagens (1) zu laden;
Schritt 3: wenn das Schneidwerkzeug (3) in den Werkzeuglesehalter (4) des intelligenten Werkzeugwagens (1) geladen ist, Lesen der Schneidwerkzeugidentifikationsdaten des Schneidwerkzeugs (3) und Bestimmen, ob die Schneidwerkzeugidentifikationsdaten korrekt sind;
Schritt 4: wenn die Schneidwerkzeugidentifikationsdaten korrekt sind, Steuern einer Anzeigeleuchte (7) eines leeren Werkzeughalters (6) des intelligenten Werkzeugwagens (1), sodass sie aufleuchtet, und Anweisen, das Schneidwerkzeug (3) in den leeren Werkzeughalter (6) des intelligenten Werkzeugwagens (1) zu laden;
Schritt 5: wenn das Schneidwerkzeug in den leeren Werkzeughalter (6) des intelligenten Werkzeugwagens (1) geladen ist, Speichern der drei der Schneidwerkzeugidentifikationsdaten (3), der Werkzeughalterposition des Werkzeughalters (6), in den das Schneidwerkzeug (3) geladen ist, und der Identifikationsinformationen einer designierten Werkzeugmaschine, an der das Schneidwerkzeug (3) anzubringen ist, als ein Element in einer integrierten Schneidwerkzeugtabelle des intelligenten Werkzeugwagens (1), und wenn dort ein Schneidwerkzeug vorhanden ist, das einem Eintrag von erforderlichen Schneidwerkzeugdaten in der Liste entspricht, das nicht in einen leeren Werkzeughalter (6) des intelligenten Werkzeugwagens (1) geladen wurde, Zurückkehren zu Schritt 1;
nachdem das Schneidwerkzeug, das jedem Eintrag von erforderlichen Schneidwerkzeugdaten entspricht, in den intelligenten Werkzeugwagen (1) geladen ist, Anweisen, zu bestätigen, dass eine Werkzeugmaschine die designierte Werkzeugmaschine ist, die in den Schneidwerkzeugbereitstellungsinformationen spezifiziert ist, was die folgenden Schritte umfasst:
Schritt 6: Anweisen, Identifikationsinformationen einer Werkzeugmaschine zu erhalten, und wenn die Identifikationsinformationen der Werkzeugmaschine erhalten wurden, Bestätigen, ob die zwei von den Identifikationsinformationen der Werkzeugmaschine und den Informationen über die designierte Werkzeugmaschine in den Schneidwerkzeugbereitstellungsinformationen übereinstimmen, und wenn die zwei übereinstimmen, dann Steuern des intelligenten Werkzeugwagens (1) gemäß der Liste, sodass die Anzeigeleuchten (7) der Werkzeughalter (6) aufleuchten, deren entsprechende Elemente in einer integrierten Schneidwerkzeugtabelle mit den Informationen über die designierte Werkzeugmaschine übereinstimmen;
wenn bestätigt wurde, dass die Werkzeugmaschine die in den Schneidwerkzeugbereitstellungsinformationen spezifizierte designierte Werkzeugmaschine ist, Anweisen, ein Schneidwerkzeug, das einem Eintrag von erforderlichen Schneidwerkzeugdaten in der Liste entspricht, aus einem Werkzeughalter (6) des intelligenten Werkzeugwagens (1) zu nehmen und das Schneidwerkzeug in einen Werkzeuglesehalter (4) des intelligenten Werkzeugwagens zu laden;
wenn das Schneidwerkzeug in den Werkzeuglesehalter (4) geladen ist, Lesen der Schneidwerkzeugidentifikationsdaten des Schneidwerkzeugs und Bestimmen, ob die Schneidwerkzeugidentifikationsdaten korrekt sind;
wenn die Schneidwerkzeugidentifikationsdaten korrekt sind, Anweisen, das Schneidwerkzeug aus dem Werkzeuglesehalter (4) in eine Schneidwerkzeugposition der Werkzeugmaschine zu bringen, die dem Eintrag von erforderlichen Schneidwerkzeugdaten entspricht.

2. Schneidwerkzeugwechselverfahren für einen intelligenten Werkzeugwagen nach Anspruch 1, wobei der Schritt des Anweisens, das Schneidwerkzeug (3) aus einem Werkzeuglesehalter (4) in eine Schneidwerkzeugposition der Werkzeugmaschine zu bringen, die dem Eintrag von erforderlichen Schneidwerkzeugdaten entspricht, die folgenden Schritte umfasst:
Schritt 7: Steuern der Werkzeugmaschine und Bewegen einer Schneidwerkzeugposition der Werkzeugmaschine, die einem Schneidwerkzeug (3) entspricht, zu einer Spindelposition der Werkzeugmaschine;
Schritt 8: Anweisen, zu bestätigen, ob sich ein zu lösendes Schneidwerkzeug an der Schneidwerkzeugposition an der Spindelposition befindet; wenn sich kein Schneidwerkzeug an der Schneidwerkzeugposition an der Spindelposition befindet, Anweisen, das Schneidwerkzeug (3) aus dem Werkzeuglesehalter (4) zu nehmen und das Schneidwerkzeug (3) an der Schneidwerkzeugposition an der Spindelposition anzubringen.

3. Schneidwerkzeugwechselverfahren für einen intelligenten Werkzeugwagen nach Anspruch 2, ferner umfassend:
Schritt 9: nachdem das Schneidwerkzeug (3) aus dem Werkzeuglesehalter (4) entnommen und an der Schneidwerkzeugposition an der Spindelposition angebracht wurde, wenn irgendein erforderliches Schneidwerkzeug in der Liste vorhanden ist, das nicht aus dem Werkzeuglesehalter (4) entnommen und in die Schneidwerkzeugposition geladen wurde, Zurückkehren zu Schritt 7.

4. Schneidwerkzeugwechselverfahren für einen intelligenten Werkzeugwagen nach Anspruch 2, ferner umfassend:
Schritt 10: wenn sich ein zu lösendes Schneidwerkzeug an der Schneidwerkzeugposition an der Spindelposition befindet, Steuern einer Anzeigeleuchte (7) eines temporären Werkzeughalters (8) des intelligenten Werkzeugwagens (1), sodass sie aufleuchtet, und Anweisen, das anzubringende Schneidwerkzeug (3) zuerst von dem Werkzeuglesehalter (4) zu dem temporären Werkzeughalter (8) zu bewegen;
Schritt 11: Anweisen, ein zu lösendes Schneidwerkzeug an der Schneidwerkzeugposition an der Spindelposition zu lösen und das zu lösende Schneidwerkzeug zu dem Werkzeuglesehalter (4) des intelligenten Werkzeugwagens (l) zu bewegen;
Schritt 12: wenn die Schneidwerkzeugidentifikationsdaten des gelösten Schneidwerkzeugs erfolgreich bestätigt wurden, Anweisen, das gelöste Schneidwerkzeug zu einem Werkzeughalter (6) des intelligenten Werkzeugwagens (1) zu bewegen, in den das anzubringende Schneidwerkzeug (3) ursprünglich geladen war;
Schritt 13: wenn ein Sensor des Werkzeughalters (6), in den das anzubringende Schneidwerkzeug (3) ursprünglich geladen war, erfasst, dass das gelöste Schneidwerkzeug darin geladen ist, wird die Anzeigeleuchte (7) des Werkzeughalters (6) ausgeschaltet;
Schritt 14: Anweisen, das anzubringende Schneidwerkzeug (3) aus dem temporären Werkzeughalter (8) zu nehmen und an dem Schneidwerkzeughalter anzubringen, der sich gerade an der Spindelposition befindet.

5. Schneidwerkzeugwechselverfahren für einen intelligenten Werkzeugwagen nach Anspruch 1, wobei die Schneidwerkzeugidentifikationsdaten einen Klingenidentifikationscode und einen Schneidwerkzeugnamen enthalten;
wenn die Schneidwerkzeugidentifikationsdaten des Schneidwerkzeugs mit den Schneidwerkzeugidentifikationsdaten des Eintrags von erforderlichen Schneidwerkzeugdaten der Liste übereinstimmen, werden die Schneidwerkzeugidentifikationsdaten als korrekt bestimmt.

6. Schneidwerkzeugwechselverfahren für einen intelligenten Werkzeugwagen nach einem der Ansprüche 1 bis 5, wobei das Systemanwendungsprogramm mit der Werkzeugmaschine über drahtlose Kommunikation kommuniziert.

7. Intelligenter Werkzeugwagen, **dadurch gekennzeichnet, dass** der intelligente Werkzeugwagen (1) verwendet wird, das Werkzeugwechselverfahren eines intelligenten Werkzeugwagens nach einem der Ansprüche 1 bis 4 auszuführen, wobei der intelligente Werkzeugwagen (1) einen Körper (2), eine drahtlose Kommunikationsvorrichtung (5), mehrere Werkzeughalter (6), einen temporären Werkzeughalter (8) und einen Werkzeuglesehalter (4) aufweist; wobei jeder Werkzeughalter (6) in den mehreren Werkzeughaltern (6) eine Anzeigeleuchte (7) und einen Sensor aufweist, um zu erfassen, ob ein Schneidwerkzeug (3) in den Werkzeughalter (6) geladen ist, und der Werkzeuglesehalter (4) zum Aufnehmen und Lesen von Schneidwerkzeugidentifikationsdaten eines Schneidwerkzeugs, das an der Werkzeugmaschine anzubringen oder davon zu lösen ist, verwendet wird.

## Revendications

1. Procédé de changement d'outil de coupe pour un chariot porte-outils intelligent, comprenant un chariot porte-outils intelligent (1), un programme d'application système et des informations de déploiement d'outils de coupe, qui incluent des informations d'une machine-outil désignée et une liste d'informations d'entrées d'outils de coupe, chaque entrée des données d'outil de coupe requises inclut des données d'identification d'outil de coupe et une position d'outil de coupe de la machine-outil, le programme d'application système effectue les étapes suivantes :
ordonner de charger l'outil de coupe correspondant à chaque entrée de données d'outil de coupe requises dans le chariot porte-outils intelligent (1), conformément à la liste qui est caractérisée comme incluant les étapes suivantes consistant à :
Étape 1 : sélectionner une entrée dans la liste et ordonner de prélever un outil de coupe (3) dans un magasin d'outils conformément à l'entrée des données d'outil de coupe requises qui est sélectionnée ;
Étape 2 : lorsque l'outil de coupe (3) est sélectionné, ordonner de charger l'outil de coupe (3) dans un support de lecture d'outil (4) du chariot porte-outils intelligent (1) ;
Étape 3 : lorsque l'outil de coupe (3) est chargé dans le support de lecture d'outil (4) du chariot porte-outils intelligent (1), lire des données d'identification d'outil de l'outil de découpe (3) et déterminer si les données d'identification d'outil de découpe sont correctes ;
Étape 4 : lorsque les données d'identification d'outil de coupe sont correctes, faire clignoter un voyant lumineux (7) d'un porte-outil vide (6) du chariot porte-outils intelligent (1) et ordonner de charger l'outil de coupe (3) est chargé dans le porte-outil vide (6) du chariot porte-outils intelligent (1) ;
Étape 5 : lorsque l'outil de coupe est chargé dans le porte-outil vide (6) du chariot porte-outils intelligent (1), les trois des données d'identification d'outil de coupe de l'outil de coupe (3), des données de position de porte-outil du porte-outil (6) sur lequel l'outil de coupe (3) est chargé et des informations d'identification d'une machine-outil désignée sur laquelle l'outil de coupe (3) doit être monté sont enregistrées comme un élément dans une table d'outils de coupe embarquée du chariot porte-outils intelligent (1) et lorsqu'un outil de coupe correspondant à une quelconque entrée de données d'outil de coupe requises figure dans la liste et n'a pas encore été chargé dans un porte-outil vide (6) du chariot porte-outils intelligent (1), revenir à l'étape 1 ;
après le chargement de l'outil de coupe correspondant à chaque entrée de données d'outil de coupe requises dans le chariot porte-outils intelligent (1), ordonner de confirmer qu'une machine-outil est la machine-outil désignée et spécifiée dans les informations de déploiement d'outil de coupe, qui comprend les étapes suivantes :
Étape 6 : ordonner au système d'obtenir une information d'identification de la machine-outil et lorsque l'information d'identification de la machine-outil est obtenue, confirmer si les deux des informations d'identification de la machine-outil et les informations d'outil de machine désignée dans l'information de déploiement d'outil de coupe correspondent et lorsque les deux correspondent, alors conformément à la liste, amener le chariot porte-outils intelligent (1) à faire clignoter les voyants lumineux (7) des porte-outils (6) dont les éléments correspondants sur une table de découpe embarquée correspondent aux informations de machine-outil désignée ;
lorsque la machine-outil est bien la machine de coupe désignée et spécifiée dans les informations de déploiement des outils de coupe, ordonner de prélever un outil de coupe correspondant à une des entrées de données d'outil de coupe requises dans la liste, depuis un porte-outil (6) du chariot porte-outils intelligent (1) et charger l'outil de coupe dans un support de lecture d'outil (4) du chariot porte-outils intelligent ;
lorsque l'outil de coupe est chargé dans le support de lecture d'outil (4), lire les données d'identification d'outil de coupe et déterminer si les données d'identification d'outil de coupe sont correctes ;
lorsque les données d'identification d'outil de coupe sont correctes, ordonner de prélever l'outil de coupe sur le support de lecture d'outil (4) à une position d'outil de coupe de la machine-outil correspondant à l'entrée des données d'outil de coupe requises.

2. Procédé de changement d'outil de coupe pour un chariot porte-outils intelligent selon la revendication 1, dans lequel l'étape consistant à ordonner de prélever l'outil de coupe (3) d'un support de lecture d'outil (4) à une position d'outil de coupe de la machine-outil correspondant à l'entrée des données d'outil de coupe requises, comprend les étapes suivantes consistant à :
Étape 7 : commander la machine-outil et déplacer une position d'outil de coupe de la machine-outil vers une position de la machine-outil correspondant à un outil de coupe (3), vers une position de broche de la machine-outil ;
Étape 8 : ordonner de confirmer si un outil de coupe à démonter est présent sur la position d'outil de coupe à la position de broche ; s'il n'y a pas d'outil de coupe sur la position d'outil de coupe à la position de broche, ordonner de retirer l'outil de coupe (3) du support de lecture d'outil (4) et de monter l'outil de coupe (3) sur la position d'outil de coupe à la position de broche.

3. Procédé de changement d'outil de coupe pour un chariot porte-outils intelligent selon la revendication 2, comprenant en outre :
Étape 9 : après que l'outil de coupe (3) a été retiré du support de lecture d'outil (4) et monté sur la position d'outil de coupe au niveau de la broche, lorsqu'il reste un quelconque outil de coupe requis dans la liste, non retiré du support de lecture d'outil (4) et chargé sur la position d'outil de coupe, revenir à l'étape 7.

4. Procédé de changement d'outil de coupe pour un chariot porte-outils intelligent selon la revendication 2, comprenant en outre :
Étape 10 : lorsqu'un outil de coupe à démonter se trouve sur la position d'outil de coupe à la position de broche, faire clignoter un voyant lumineux (7) d'un porte-outil temporaire (8) du chariot porte-outils intelligent (1) et ordonner de déplacer tout d'abord l'outil de coupe à monter (3) du support de lecture d'outil (4) au porte-outil temporaire (8).
Étape 11 : ordonner de démonter un outil de coupe à démonter sur la position d'outil de coupe à la position de broche et déplacer l'outil de coupe à démonter vers le support de lecture d'outil (4) du chariot porte-outils intelligent (1) ;
Étape 12 : lorsque les données d'identification d'outil de coupe de l'outil de coupe démonté sont confirmées, ordonner de déplacer l'outil de coupe démonté vers un porte-outil (6) du chariot porte-outils intelligent (1) où l'outil de coupe à monter (3) a été initialement chargé ;
Étape 13 : lorsqu'un capteur du porte-outil (6), où l'outil de coupe à monter (3) a été chargé au début, détecte que l'outil de coupe démonté y a été chargé, le voyant lumineux (7) dudit porte-outil (6) s'éteint ;
Étape 14 : ordonner de retirer l'outil de coupe à monter (3) du porte-outil temporaire (8) et de le monter sur le porte-outil actuellement positionné à la position de broche.

5. Procédé de changement d'outil de coupe pour un chariot porte-outils intelligent selon la revendication 1, dans lequel les données d'identification d'outil de coupe comprennent un code d'identification de lame et un nom d'outil de coupe ; lorsque les données d'identification d'outil de coupe de l'outil de coupe correspondent aux données d'identification d'outil de coupe de l'entrée de données d'outil de coupe requises de la liste, les données d'identification d'outil de coupe sont déterminées comme correctes.

6. Procédé de changement d'outil de coupe pour un chariot porte-outils intelligent selon une quelconque des revendications 1 à 5, dans lequel le programme d'application système communique avec la machine-outil par communication sans fil.

7. Chariot porte-outils intelligent, **caractérisé en ce que** le chariot porte-outils intelligent (1) est utilisé pour mettre en œuvre le procédé de changement d'outil d'un chariot porte-outils intelligent selon une quelconque des revendications 1 à 4, dans lequel le chariot porte-outils intelligent (1) comprend un corps (2), un dispositif de communication sans fil (5), une pluralité de porte-outils (6), un porte-outil temporaire (8) et un support de lecture d'outil (4), dans lequel chaque porte-outil (6) dans la pluralité de porte-outils (6) comporte un voyant lumineux (7) et un capteur pour détecter si un outil de coupe (3) est chargé sur le porte-outil (6), le support de lecture d'outil (4) est utilisé pour recevoir et lire les données d'identification d'outil de coupe d'un outil de coupe à monter ou à démonter de la machine-outil.
